# EUROPÄISCHE PATENTANMELDUNG

(11) **EP 1 081 293 A2**
(43) Veröffentlichungstag der Anmeldung: **07.03.2001**
(21) Anmeldenummer: 00115952.4
(22) Anmeldetag: 26.07.2000
(51) Int. Cl.: E02F 9/02, B66C 23/50

(54) **Zweiwegebagger**

(30) Priorität: 06.09.1999 DE 29915665 U
(71) Anmelder: Robel Bahnbaumaschinen GmbH, 83395 Freilassing (DE)
(72) Erfinder: Kettl, Alois, 4742 Pram (AT)

(57) **Zusammenfassung**

Ein auf Straßen- bzw. Schienenfahrwerken (2,3) verfahrbarer Zweiwegebagger (1) weist zusätzlich zu einem Kranausleger (12) zwei durch Antriebe (36) höhen- und seitenverstellbare Hilfsausleger (15) auf. An diese sind unterschiedliche Arbeitsgeräte (21) ankuppelbar.

## Beschreibung

Die Erfindung betrifft einen Zweiwegebagger mit einem auf Straßen- bzw. Schienenfahrwerken abstützbaren Maschinenrahmen und einem durch Antriebe höhen- und seitenverstellbaren Kranausleger, sowie ein Verfahren zur Verladung von Schienen.

Zweiwegebagger mit wahlweise einsetzbaren Straßen- und Schienenfahrwerken sind bereits vielfach bekannt, wie z.B. durch EP 0 556 161 A1. Dieser Zweiwegebagger ist zusätzlich zu einem durch Antriebe verstellbaren Kranausleger mit Stopfaggregaten zum Unterstopfen eines Gleises ausgestattet.

Die Aufgabe der vorliegenden Erfindung liegt nun in der Schaffung eines Zweiwegebaggers der gattungsgemäßen Art, der unter minimalen Umrüstarbeiten für eine Vielzahl verschiedener Gleisbauarbeiten, insbesondere für Schienenbewegungen einsetzbar ist.

Diese Aufgabe wird erfindungsgemäß mit einem Zweiwegebagger der eingangs beschriebenen Art dadurch gelöst, daß zusätzlich zum Kranausleger zwei durch Antriebe höhen- und seitenverstellbare Hilfsausleger vorgesehen sind.

Mit den beiden Hilfsauslegern ergeben sich in Kombination mit dem Kranausleger vielfältige Einsatzmöglichkeiten, insbesondere beim Transport von Schienen. So können die Hilfsausleger beispielsweise beim Abziehen von Langschienen zum Festklemmen des Zweiwegebaggers am Gleis verwendet werden, während parallel dazu der Kranausleger zur Fixierung der abzuziehenden Langschiene einsetzbar ist. Ebenso sind die beiden Kranausleger auch zur Schienenführung verwendbar. Desweiteren können aber auch sämtliche bekannten Arbeitsvorrichtungen angekuppelt werden. Unabhängig von der Art der verschiedenen ankuppelbaren Arbeitsvorrichtungen kann in vorteilhafter Weise durch ein Zusammenwirken der beiden Hilfsausleger mit dem Kranausleger ein verbesserter Arbeitsablauf erzielt werden.

Weitere vorteilhafte Ausbildungen der Erfindung ergeben sich aus den weiteren Patentansprüchen und der Zeichnung.

Im folgenden wird die Erfindung anhand in der Zeichnung dargestellter Ausführungsbeispiele näher beschrieben.

Es zeigen:
Fig. 1 eine Seitenansicht eines Zweiwegebaggers beim Abziehen von langverschweißten Schienen, mit zwei Hilfsauslegern und einem Kranausleger,
Fig. 2 eine Draufsicht auf den Zweiwegebagger, wobei den Hilfsauslegern Schienenführungen zum Ausspreizen von Neuschienen zugeordnet sind,
Fig. 3 eine Draufsicht auf den zum Aufladen von alten Schienen eingesetzten Bagger, und
Fig. 4 eine weitere vereinfachte Draufsicht zum Wechseln von Schwellen.

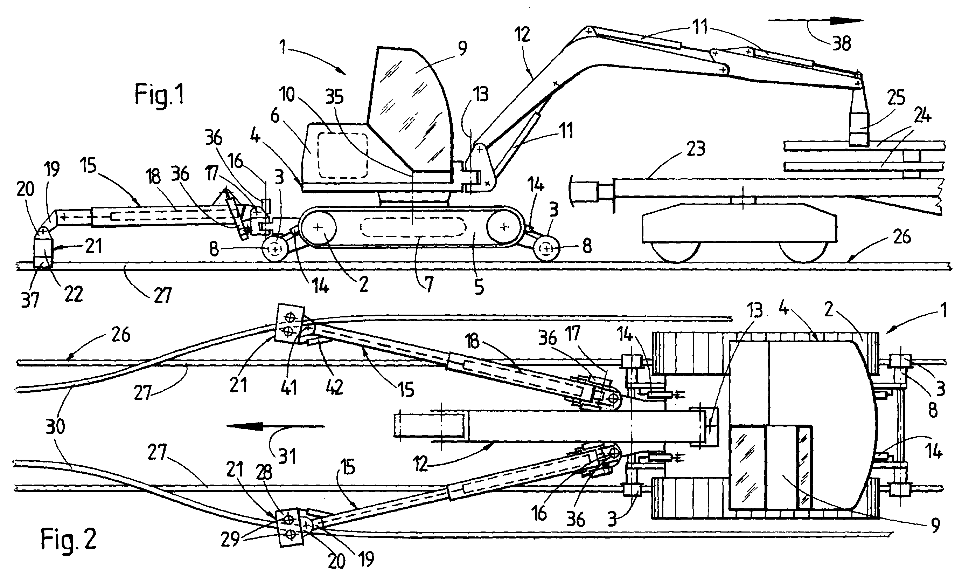

Ein in Fig. 1 ersichtlicher Zweiwegebagger 1 weist einen auf Straßen- bzw. Schienenfahrwerken 2,3 abstützbaren Maschinenrahmen 4 auf, der sich aus einem die Straßen- bzw. Schienenfahrwerke 2,3 miteinander verbindenden Fahrwerksteil 5 und einem relativ dazu um eine vertikale Achse 35 drehbaren Drehteil 6 zusammensetzt. Die beiden Straßen- bzw. Schienenfahrwerke 2,3 sind durch eigene Antriebe 7,8 beaufschlagbar. Die Schienenfahrwerke 3 sind durch Antriebe 14 auf ein Gleis 26 absenkbar. Die Energieversorgung erfolgt durch eine neben einer Arbeitskabine 9 vorgesehene Energieeinheit 10.

Der Drehteil 6 ist mit einem durch Antriebe 11 höhen- und seitenverstellbaren Kranausleger 12 verbunden. Durch eine vertikale Achse 13 ist auch eine Verschwenkung des Kranauslegers 12 relativ zum Drehteil 6 möglich. Die Schienenfahrwerke 3 sind über Antriebe 14 höhenverstellbar mit dem Fahrwerksteil 5 verbunden.

Zwei in Maschinenquerrichtung voneinander distanzierte Hilfsausleger 15 sind jeweils durch Antriebe 36 sowohl um eine vertikale als auch horizontale Achse 16,17 verschwenkbar mit dem Fahrwerksteil 5 verbunden und durch Antriebe 18 in Längsrichtung teleskopisch verschiebbar ausgebildet.

An einem vom Fahrwerksteil 5 distanzierten freien Ende 19 der Hilfsausleger 15 ist eine Kupplung 20 zur lösbaren Befestigung von verschiedenen Arbeitsgeräten 21 vorgesehen. Im dargestellten Beispiel ist als Arbeitsgerät 21 eine Schienenzange 22 mit zueinander beistellbaren Klemmbacken 37 vorgesehen.

Auf Transportwaggons 23 gelagerte, langverschweißte Schienen 24 werden vorzugsweise paarweise durch eine am Kranausleger 12 befestigte Schienenzange 25 erfaßt, während sich der Zweiwegebagger 1 über die Schienenfahrwerke 3 auf dem Gleis 26 abstützt. Gleichzeitig erfolgt durch die beiden Hilfsausleger 15 bzw. die mit diesem verbundenen Schienenzangen 22 ein Festklemmen des Zweiwegebaggers 1 auf beiden Schienen 27 des Gleises 26. Das Abladen der Schienen 24 erfolgt nun dadurch, daß eine an die Transportwaggons 23 angekuppelte, nicht näher dargestellte Lokomotive sich vom Zweiwegebagger 1 in Richtung eines Pfeiles 38 wegbewegt. Dadurch kommt es zu einer Relativverschiebung der erfaßten Schienen 24 relativ zu den Transportwaggons 23. Sobald die erfaßten Enden der Schienen 24 über dem Gleis 26 schweben, kann durch Absenken des Kranauslegers 12 ein Ablegen der Schienen 24 beispielsweise zwischen den Schienen 27 des Gleises 26 erfolgen. Dieser beschriebene Abladevorgang wiederholt sich für das nächste Paar von Schienen 24, wobei der Zweiwegebagger 1 unter Lösen der Schienenzangen 22 in Richtung zu den Transportwaggons 23 verfahren wird.

Bei dem in Fig. 2 ersichtlichen Ausführungsbeispiel sind drehbare Rollen 29 aufweisende Schienenführungen 28 als Arbeitsgerät 21 an die beiden Hilfsausleger 15 angekuppelt. Jede Schienenführung 28 ist mit Hilfe eines Antriebes 42 um eine vertikale Achse 41 gegenüber dem Hilfsausleger 15 verschwenkbar ausgebildet. Mit Hilfe dieser Schienenführungen 28 ist es möglich, zwischen den Schienen 27 des Gleises 26 vorgelagerte Neuschienen 30 über die Schienen 27 anzuheben und zur Ablage auf Schwellenenden des Gleises 26 auseinanderzuspreizen. Dabei wird der Zweiwegebagger 1 über seine Schienenfahrwerke 3 kontinuierlich auf dem Gleis 26 in der Fahrtrichtung (Pfeil 31) vorwärtsbewegt.

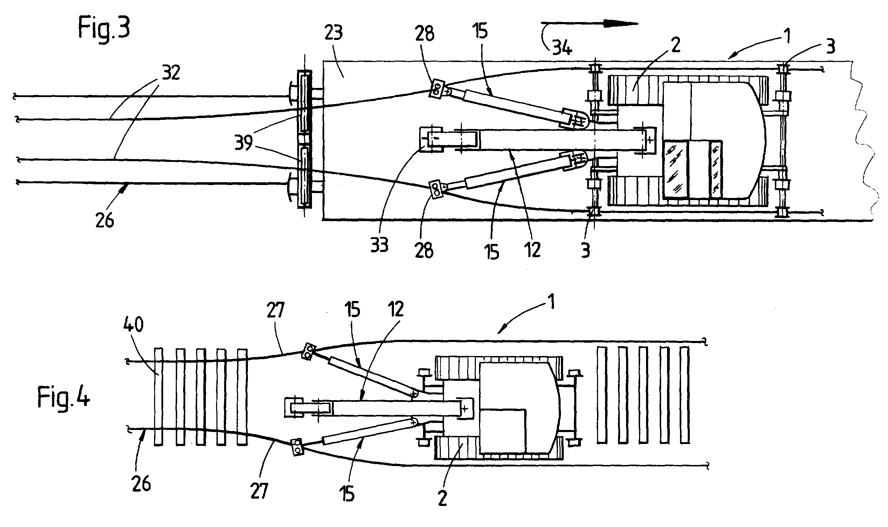

Bei dem in Fig. 3 ersichtlichen Beispiel befindet sich der Zweiwegebagger 1 auf einem Ende eines Transportwaggons 23. Auf dem Gleis 26 gelagerte Altschienen 32 werden beispielsweise mittels einer am Kranausleger 12 befestigten Trennsäge 33 abgetrennt, so daß die Altschienen 32 auf den bereitgestellten Transportwaggon 23 transportierbar sind. Anschließend werden die abgetrennten Altschienen 32 durch den Einsatz des Kranauslegers 12 und/oder der Hilfsausleger 15 paarweise auf den Transportwaggon 23 gezogen, wobei der Zweiwegebagger 1 auf seinem als Raupenfahrwerk ausgebildeten Straßenfahrwerk 2 in Richtung eines Pfeiles 34 auf dem Transportwaggon 23 zurückfährt.

Sobald sich beide Altschienen 32 auf dem Transportwaggon 23 befinden, erfolgt eine Vorfahrt des Zweiwegebaggers 1 (Gegenrichtung des Pfeiles 34), wobei mit Hilfe der auf den Hilfsauslegern 15 befestigten Schienenführungen 28 ein Auseinanderspreizen der Altschienen 32 erfolgt, so daß diese schließlich jeweils im bezüglich der Wagenquerrichtung äußersten Endbereich des Transportwaggons 23 zu liegen kommen und gleichzeitig als Auflage der vorzugweise mit einem Doppelspurkranz ausgestatteten Schienenfahrwerke 3 dient. Damit ist ein rascheres Hin- und Herbewegen des Zweiwegebaggers 1 für die nachfolgende Verladung der weiteren Altschienen 32 gewährleistet. Auf der Pufferbrust des Transportwaggons 23 gelagerte Rollen 39 erleichtern das Aufladen der Altschienen 32.

In Fig. 4 ist das Wechseln von auf Brücken fixierten Schwellen 40 (Brückenholz) dargestellt. Mittels der beiden Hilfsausleger 15 werden die Schienen 27 des Gleises 26 ausgespreizt, so daß die freigelegten Schwellen 40 durch den Kranausleger 12 entfernbar sind. Ebenso können mit Hilfe des Kranauslegers 12 neue Schwellen 40 verlegt werden, wonach wiederum mit Hilfe der Hilfsausleger 15 die beiden Schienen 27 in ihre endgültige Position auf die neuen Schwellen 40 abgelegt werden.

## Patentansprüche

1. Zweiwegebagger (1) mit einem auf Straßen- bzw. Schienenfahrwerken (2,3) abstützbaren Maschinenrahmen (4) und einem durch Antriebe (11) höhen- und seitenverstellbaren Kranausleger (12), **dadurch gekennzeichnet**, daß zusätzlich zum Kranausleger (12) zwei durch Antriebe (36) höhen- und seitenverstellbare Hilfsausleger (15) vorgesehen sind.

2. Zweiwegebagger nach Anspruch 1, dadurch gekennzeichnet, daß die beiden Hilfsausleger (15) auf einem die Straßen- und Schienenfahrwerke (2,3) miteinander verbindenden Fahrwerksteil (5) befestigt sind, während der Kranausleger (12) auf einem relativ zum Fahrwerksteil (5) drehbaren sowie eine Arbeitskabine (9) aufweisenden Drehteil (6) verbunden ist.

3. Zweiwegebagger nach Anspruch 1 oder 2, dadurch gekennzeichnet, daß jeder Hilf sausleger (15) an einem vom Maschinenrahmen (4) distanzierten freien Ende (19) eine Kupplung (20) zum Ankuppeln verschiedener Arbeitsgeräte (21) aufweist.

4. Zweiwegebagger nach Anspruch 1, 2 oder 3, dadurch gekennzeichnet, daß jeder Hilfsausleger (15) durch Antriebe (18) in seiner Längsrichtung teleskopisch verlängerbar ausgebildet ist.

5. Zweiwegebagger nach einem der Ansprüche 1 bis 4, dadurch gekennzeichnet, daß die beiden Hilfsausleger (15) bezüglich einer senkrecht zur Maschinenlängsrichtung verlaufenden Maschinenquerrichtung einander gegenüberliegend angeordnet sind.

6. Zweiwegebagger nach einem der Ansprüche 1 bis 5, dadurch gekennzeichnet, daß als Arbeitsgerät (21) eine Schienenzange (22) mit zwei in Maschinenquerrichtung zueinander verschwenkbaren Klemmbacken (37) vorgesehen ist.

7. Zweiwegebagger nach einem der Ansprüche 1 bis 6, dadurch gekennzeichnet, daß als Arbeitsgerät (21) eine drehbare Rollen (29) zur Schienenlagerung aufweisende Schienenführung (28) vorgesehen ist, wobei die Schienenführung (28) durch einen Antrieb (42) um eine vertikale Achse (41) verdrehbar ausgebildet ist.

8. Verfahren zum Abziehen von auf Transportwaggons (23) gelagerten Schienen (24) auf ein Schienen (27) aufweisendes Gleis (26), mit einem Zweiwegebagger (1) nach Anspruch 1, dadurch gekennzeichnet, daß die abzuziehende Schiene (24) durch eine auf dem Kranausleger (12) befestigte Schienenzange (25) und die beiden Schienen (27) des Gleises (26) durch eine jeweils an einem Hilfsausleger (15) befestigte Schienenzange (22) erfaßt werden, wonach die Transportwaggons (23) vom Zweiwegebagger (1) wegbewegt werden.

9. Verfahren zum Verladen von auf einem Gleis (26) liegenden Altschienen (32) auf einen Transportwaggon (23), mit einem Zweiwegebagger (1) nach Anspruch 1 gekennzeichnet durch folgende Schritte:
a) der Zweiwegebagger (1) wird auf einem Ende des Transportwaggons (23) positioniert,
b) zwei abzutransportierende Altschienen (32) werden durch den Zweiwegebagger (1) auf den Transportwaggon (23) gezogen, wobei diese Altschienen (32) mit Hilfe der Hilfsausleger (15) in einem größtmöglichen Abstand zueinander auseinandergespreizt werden,
c) zum Aufladen weiterer Altschienen (32) wird der Zweiwegebagger (1) über seine Schienenfahrwerke (3) auf den auseinandergespreizten und auf dem Transportwaggon (23) liegenden Altschienen (32) verfahren.
